Europäisches Patentamt

European Patent Office

Office européen des brevets

(11) Veröffentlichungsnummer : **0 126 845**
**B1**

(12) # EUROPÄISCHE PATENTSCHRIFT

(45) Veröffentlichungstag der Patentschrift :
29.07.87

(21) Anmeldenummer : 84101411.1

(22) Anmeldetag : 11.02.84

(51) Int. Cl.⁴ : **B 29 C 43/48**, B 30 B  5/06,
B 65 G  15/00

(54) Kontinuierlich arbeitende Presse mit mehrlagigen Pressbändern.

(30) Priorität : **28.04.83 DE 3315367**

(43) Veröffentlichungstag der Anmeldung :
**05.12.84 Patentblatt 84/49**

(45) Bekanntmachung des Hinweises auf die Patenterteilung : **29.07.87 Patentblatt 87/31**

(84) Benannte Vertragsstaaten :
**CH FR GB IT LI SE**

(56) Entgegenhaltungen :
**CH-A-  461 276**
**GB-A- 1 500 909**

(73) Patentinhaber : **Held, Kurt**
**Alte Strasse 1**
**D-7218 Trossingen 2 (DE)**

(72) Erfinder : **Held, Kurt**
**Alte Strasse 1**
**D-7218 Trossingen 2 (DE)**

## Beschreibung

Die Erfindung betrifft eine kontinuierlich arbeitende Presse mit einem oberen und einem unteren über jeweils ein Umlenkrollenpaar geführten Mehrlagenbandpaket, das aus mehreren ineinandergeschobenen, durch formschlüssige Mittel gegen seitliches herlaufen gesichesten und hinsichtlich ihrer Länge und Dicke auf den Verwendungszweck abgestimmten Pressbändern besteht, zwischen deren einander zugewandten Trums eine Werkstoffbahn, beispielsweise Laminate, Spanplatten, Faserplatten, Sperrholz, Elektrolaminate oder dergleichen, durch Druckeinwirkung verdichtet werden kann. Eine solche Presse ist aus DE-A-2 735 142 bekannt.

Zur Herstellung von dekorativen Schichtstofflaminaten, Spanplatten, Faserplatten, Sperrholzplatten, Elektrolaminaten usw. muss das Pressgut einem hohen Druck und einer hohen Temperatur ausgesetzt werden, damit das Harz vollständig ausgehärtet wird und die Erzeugnisse die geforderte Qualität besitzen. Es ist daher erforderlich, dass die verwendete Presse den notwendigen Druck aufbringen und die benötigte Wärme übertragen kann.

Zur Herstellung der oben genannten Werkstoffe werden kontinuierliche und diskontinuierliche Pressen eingesetzt. Um den Ausstoss der diskontinuierlich arbeitenden Einetagen-Pressen zu erhöhen, werden Mehretagenpressen verwendet, wobei das Pressgut auf einzelne Zulagebleche geschichtet wird und diese anschliessend in jeweils eine Etage der Mehretagenpresse gelegt werden. Beim nachfolgenden Verpressen des Pressgutes muss bei der Temperatur- und Druckführung der Presse auf die äussersten Presspakete Rücksicht genommen werden, womit an den Rändern rund 40 bis 50 mm des Pressgutes drucklos aushärtet und anschliessend besäumt werden muss, was einen Verschnitt von 5 bis 10 % ausmacht. Ausserdem lässt sich eine diskontinuierlich arbeitende Presse nur mit grossem apparativen Aufwand in eine kontinuierlich arbeitende Produktionsanlage integrieren. Wünschenswert ist daher auch eine kontinuierlich arbeitende Presse, wodurch als Fertigprodukt eine endlose Platte entsteht, die auch im Hinblick auf günstigen Verschnitt angestrebt wird.

Bei solchen kontinuierlich arbeitenden Pressen werden zwei endlose Stahlbänder, die den Pressdruck und die zur Aushärtung des Harzes benötigte Wärmemenge auf das Pressgut übertragen und dieses gleichzeitig durch die Presse hindurchziehen, über jeweils eine Antriebs- und Umlenktrommel so geführt, dass zwischen den gegenüberliegenden Bandtrums eine Reaktionszone gebildet wird. Der Druck wird üblicherweise mechanisch durch sich auf den Pressbändern abwälzenden Rollen oder hydraulisch mittels mit fluiden Druckmitteln gefüllten, nach aussen abgedichteten Räumen übertragen. Mit Rücksicht auf die zulässigen Biegespannungen der Endlosbänder, die bei der Umlenkung auftreten, darf das Stahlband eine gewisse Dicke nicht überschreiten. Durch die Zugfestigkeit und Dicke des Stahlbandes wird aber der auf das Pressgut zu übertragene Druck begrenzt, was die Leistung der kontinuierlichen Presse stark eingrenzt und sie insbesondere zur Herstellung technischer Laminate, wie Elektrolaminate, nur schwer einsetzbar macht.

Da der zu übertragende Druck direkt proportional der Dicke des Stahlbandes ist, ist es bekannt, mehrere Bänder zur Vergrösserung der Dicke unter gleichzeitiger Erhaltung der Biegefestigkeit zu einem Paket übereinanderzuschichten (siehe DE-OS 19 39 784) und den erhöhten Druck durch ein solches Mehrlagenbandpaket zu übertragen. Vorteilhafterweise erhält man dadurch die Möglichkeit, den Druck soweit wie für das Pressgut nötig zu erhöhen. Gleichzeitig ist dadurch die Wärmekapazität proportional zur Summe der Einzeldicken aller Bänder vergrössert, wenn die Prozesswärme ausserhalb der Reaktionszone auf die Bänder übertragen und darin gespeichert in die Reaktionszone überführt wird.

Nachteilig beim Einsatz eines Mehrlagenbandpaketes ist es jedoch, dass beim Betrieb der Presse die einzelnen Pressbänder unter sich seitlich verlaufen können. In der DE-PS 27 35 142 wird deshalb vorgeschlagen, dass die einzelnen Pressbänder eines Mehrlagenbandpaketes in sich berührenden Bandoberflächen Nuten aufweisen, in denen Zentriermittel eingelegt oder darin befestigt sind. Als nachteilig ist hier jedoch anzusehen, dass die Verschiebekräfte senkrecht zur Laufrichtung des Mehrlagenbandpakets auf nur zwei links und rechts entlang der Bandkante mit kleinem Querschnitt eingelegte Zentriermittel einwirken und damit · bei höheren Drücken die Möglichkeit der Zerstörung dieser Zentriermittel besteht.

Die aus den beiden gegenüberliegenden Mehrlagenbandpaketen gebildete Reaktionszone wird nach oben und unten durch das Mehrlagenbandpaket, nach vorne in Laufrichtung der Pressgutbahn durch gehärtetes Harz und nach hinten durch ungeschmolzenes Harz abgeschlossen. Nach den Seiten hin ist sie jedoch offen, wodurch überschüssiges Harz hier austreten kann. Damit härtet das Laminat im Randbereich drucklos aus und die geforderte Dickentoleranz kann hier nicht erreicht werden, so dass dieser sogenannte Pressrand nach Fertigstellung des Laminats abgeschnitten werden muss.

Die Aufgabe der Erfindung besteht nun darin, eine kontinuierlich arbeitende Doppelbandpresse zu schaffen, mit der es möglich ist, im isochoren Betrieb Laminate ausserordentlich geringer Dickentoleranzen bis hinab zu 5/100 mm herzustellen, wobei ein seitliches Verlaufen der mehrlagig ausgebildeten Bänder und ein seitliches Austreten des Pressgutes vermieden werden muss, um den Verschnitt durch die am Rand besäumte Fläche zu verringern.

Die Lösung dieser Aufgabe wird durch die technische Lehre vermittelt, dass die Pressbänder der Mehrlagenbandpakete an ihren innenliegenden sich berührenden Flächen mit in Bandlaufrichtung verlaufenden, durchgehenden und sich über die ganze Bandlaufrichtung erstreckenden Nuten mit in diese eingreifenden Zahnkanten versehen sind und die aussenliegenden Bänder der Bandpakete an ihren Rändern einander gegenüberliegend mit Randnuten ausgestattet sind, in die ein Draht eingelegt ist, dessen Durchmesser ungefähr so gross wie die Summe aus der zweifachen Tiefe der Randnut und dem Abstand der Pressbänder voneinander ist und der Draht mit derselben Vorschubgeschwindigkeit wie das Pressgut durch die Presse hindurchgezogen wird.

Die mit der Erfindung erzielbaren Vorteile bestehen darin, dass die einzelnen Pressbänder des Mehrlagenbandpakets nicht mehr untereinander seitlich verlaufen können. Durch die besondere Ausgestaltung der Zentriermittel, die über die gesamte Bandbreite verteilt sein können, besitzen diese eine grosse Querschnittsfläche, womit sie durch die auftretenden Verschiebekräfte nicht zerstört werden können, so dass das Mehrlagenbandpaket bei allen für das Pressbandmaterial selbst zulässigen Betriebsbedingungen vor einem Verlaufen der einzelnen Pressbänder sicher geschützt ist. Durch die besondere Form der Nuten und Zahnkanten erhält man bei der Zentrierung der einzelnen Pressbänder eine grosse Genauigkeit und damit eine hohe Geradeaus-Führungsgenauigkeit.

Weiter erhält man durch die Mitführung des Drahtes entlang der Seitenkanten der Mehrlagenbandpakete eine nach allen Seiten abgeschlossene Reaktionszone, womit eine ideale Temperaturführung für das Harz erreicht wird. Damit werden bei technischen Laminaten, beispielsweise Elektrolaminaten, eine bessere Haftung der Kupferfolie auf dem Schichtstoffkern, wie sie beispielsweise in DIN 40802 definiert wird, erreicht, was sich in einer besseren Scherfestigkeit ausdrückt. Durch den mitgeführten Draht wird ein isochorer Betrieb der Presse ermöglicht, d. h. die Reaktionszone besitzt über die gesamte Fläche, wie an den Rändern, eine bestimmte Höhe, womit eine kleine Dickentoleranz für das Pressgut möglich ist. Der drucklos ausgehärtete Rand, der nach der Verpressung noch abgeschnitten werden muss, beschränkt sich auf wenige Millimeter, so dass ein geringerer Verschnitt anfällt.

Die Zeichnungen stellen schematisch eine Ausführungsform der Erfindung dar. Dabei zeigen

Figur 1 eine Doppelbandpresse im Schnitt in Längsrichtung mit zwei Bandtrums,

Figur 2 einen Teilschnitt eines Mehrlagenbandpaketes, quer zur Laufrichtung gesehen,

Figur 3 im Schnitt quer zur Laufrichtung die durch die Innenseiten zweier Pressbänder gebildete Reaktionszone mit seitlicher Begrenzung durch einen mitgeführten Draht.

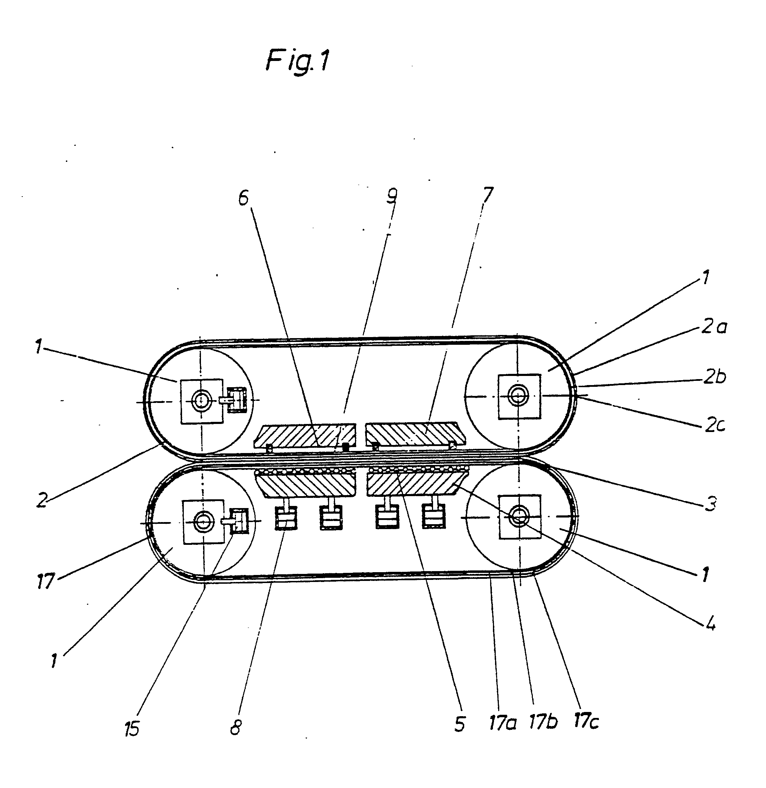

Die in Fig. 1 gezeigte kontinuierlich arbeitende Presse enthält zwei Mehrlagenbandpakete 2 und 17, die über die Umlenkrollen 1 laufen. Die Mehrlagenbandpakete bestehen aus den einzelnen Pressbändern 2a, 2b, 2c und 17a, 17b, 17c, deren gestreckte Länge so bestimmt ist, dass sie die zum Vorschub notwendigen Spann- und Umfangskräfte gleichmässig aufnehmen können. Der mechanische bzw. hydraulische Druck wird von den Druckplatten 4 und 7 über Wälzkörper 5 oder fluide Druckmittel 6 auf die Bandtrums 3 der Mehrlagenbandpakete 2 und 17 ausgeübt. Das Pressengestell, das die von den druckerzeugenden Hydraulikzylindern 8 oder von dem fluiden Druckmittel 6 in den Hohlräumen 9 ausgehende Reaktionskräfte aufnimmt, ist weggelassen. Die Mehrlagenbandpakete 2 und 17 werden, wie bekannt, durch Spannmittel 15, z. B. Hydraulikzylinder, gespannt und von den Umlenktrommeln 1 angetrieben.

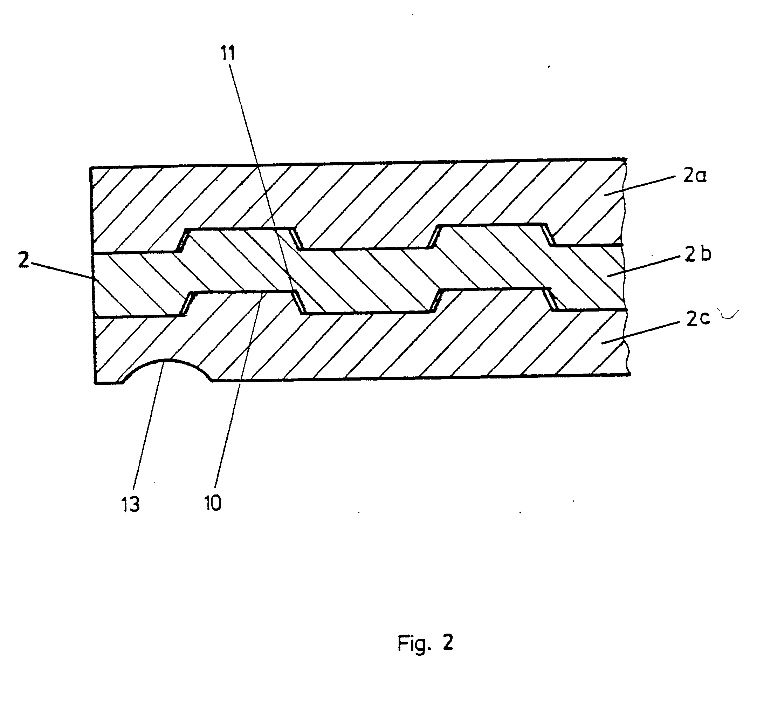

Damit die einzelnen Pressbänder 2a, 2b, 2c und 17a, 17b, 17c durch senkrecht zur Laufrichtung des Mehrlagenbandpaketes auftretende Verschiebekräfte nicht seitlich verlaufen können, haben die einzelnen Pressbänder 2a, 2b, 2c, wie in Fig. 2 gezeigt, Nuten 11, die durchgehend längs in Laufrichtung in das Pressband eingearbeitet sind. In diese greift eine Zahnkante 10 der darunterliegenden, berührenden Bandoberfläche ein, die als positiv erhabenes Gegenstück der Nut ausgebildet ist und ebenfalls über die gesamte Länge des Bandes reicht.

Erforderlich für die Seitenführung ist mindestens links und rechts der Bandkanten der Pressbänder jeweils eine Nut, in die die entsprechende Zahnkante des darunterliegenden Bandes eingreift. Zur Verringerung der auftretenden Spannungen auf die einzelne Zahnkante wird man vorteilhafterweise jedoch über die Bandbreite mehrere solcher Nuten und Zahnkanten vorsehen. Zweckmässigerweise kann man für die Nuten eine Breite von 3 mm wählen.

Die in Fig. 2 gezeigten Nuten 11 und Zahnkanten 10 besitzen einen trapezförmigen Querschnitt. Es kann jedoch auch jeder andere geeignet erscheinende Querschnitt gewählt werden. Mit dieser Massnahme kann kein seitliches Verlaufen der einzelnen Pressbänder mehr erfolgen, während die erforderliche Relativbewegung der Pressbänder in Laufrichtung nicht beeinträchtigt ist. Durch die grosse Querschnittsfläche der Zahnkanten wird Zerstörungsfreiheit derselben und eine grosse Genauigkeit bei der Seitenführung der einzelnen Pressbänder erreicht. Man erhält damit eine hohe Betriebssicherheit der Mehrlagenbandpakete.

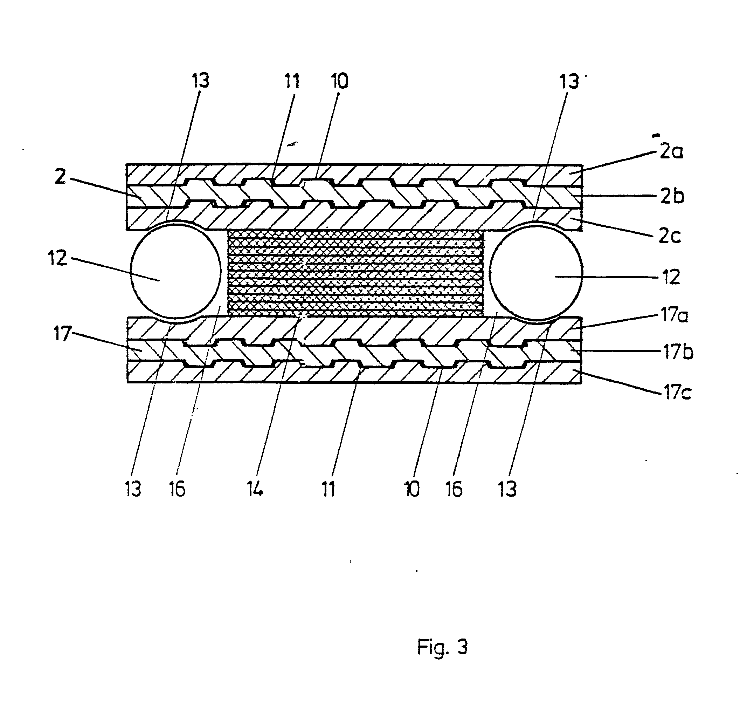

Fig. 3 zeigt die Reaktionszone, die durch die aus den Mehrlagenbandpaketen 2, 17 bestehenden Trums 3 gebildet wird. Diese Reaktionszone wird zur Seite hin durch den mitgeführten Draht 12 abgedichtet. Der Draht 12, der mit derselben Geschwindigkeit wie das Pressgut 14 durch die Presse mit hindurchgezogen wird, ist in zwei Randuten 13 eingelegt, die am jeweiligen Rand des dem Pressgut 14 zugewendeten Pressbandes 2c des oberen Mehrlagenbandpakets und Pressbandes 17a des unteren Mehrlagenbandpakets eingearbeitet sind. Die Randnuten besitzen den Querschnitt eines Kreisabschnitts, Prismas oder dergleichen. Der Durchmesser des Drahtes entspricht dabei gerade der Summe aus der zweifachen Nuttiefe und der Höhe des Laminats. Damit wird die Höhe der Reaktionszone auch an den Seitenflächen konstant gehalten und die kontinuierliche Presse gestattet einen isochoren Betrieb. Es kann somit eine ausserordentlich geringe Dickentoleranz des Pressgutes 14 gewährleistet werden. Bei Elektrolaminaten sind dadurch beispielsweise Dickentoleranzen von nur 5/100 mm möglich.

Zwischen dem Draht 12 und dem Pressgut 14 verbleibt ein geringer Hohlraum 16, in dem das überschüssige Harz, das aus dem Pressgut 14 austritt, gesammelt wird. Somit wird der Bereich des drucklos ausgehärteten Pressgutes auf wenige Millimeter beschränkt und es fällt nur ein sehr geringer Verschnitt am Rand an.

Die Reaktionszone, die von oben und unten durch die Mehrlagenbandpakete 2, 17 nach den Seiten durch den mitgeführten Draht 13, nach vorne in Vorschubrichtung des Pressbandes gesehen, durch das gehärtete Harz und nach hinten durch das noch ungeschmolzene Harz begrenzt wird, bildet einen abgeschlossenen Raum, in dem die Verfahrensbedingungen ideal dem zu verpressenden Gut und dem verwendeten Harz angepasst werden können. Da im Gegensatz zur diskontinuierlichen Mehretagenpresse nur ein Pressgut hergestellt wird, müssen nicht über die ganzen auf einmal hergestellten Pressguterzeugnisse gemittelte Verfahrensbedingungen gewählt werden. Hiermit können qualitativ bessere Pressguterzeugnisse hergestellt werden, was sich beispielsweise in einer um ca. 30 % grösseren Scherfestigkeit der Cu-Folie vom Schichtstoff bei Elektrolaminaten gegenüber solchen, die auf herkömmliche Art hergestellt werden, äussert.

**Patentansprüche**

1. Kontinuierlich arbeitende Presse mit einem oberen und einem unteren über jeweils ein Umlenkrollenpaar geführten Mehrlagenbandpaket (2, 17), das aus mehreren ineinandergeschobenen, durch formschlüssige Mittel gegen seitliches Verlaufen gesicherten und hinsichtlich ihrer Länge und Dicke auf den Verwendungszweck abgestimmten Pressbändern (2a, 2b, 2c) bzw. (17a, 17b, 17c) besteht, zwischen deren einander zugewandten Trums (3) eine Werkstoffbahn, beispielsweise Laminate, Spanplatten, Faserplatten, Sperrholz, Elektrolaminate oder dergleichen, durch Druckeinwirkung verdichtet werden kann, dadurch gekennzeichnet, dass diese Mittel zur Sicherung gegen ein seitliches Verlaufen der Pressbänder (2a, 2b, 2c bzw. 17a, 17b, 17c) gegeneinander aus in Bandlaufrichtung verlaufenden durchgehenden und sich über die ganze Bandlaufrichtung an den innenliegenden, sich berührenden Flächen der Pressbänder (2a, 2b, 2c) und (17a, 17b, 17c) der Mehrlagenbandpakete (2) und (17) erstreckenden Nuten (11) mit in diese eingreifenden Zahnkanten (10) bestehen und die aussenliegenden Bänder (2c) und (17a) der Mehrlagenbandpakete (2) und (17) an ihren Rändern einander gegenüberliegend mit Randnuten (13) ausgestattet sind, in die ein Draht (12) eingelegt ist, dessen Durchmesser ungefähr so gross wie die Summe der zweifachen Tiefe der Randnut (13) und des Abstands der beiden Pressbänder (2) und (17) voneinander ist und der Draht (12) mit derselben Vorschubgeschwindigkeit wie das Pressgut (14) durch die Presse hindurchgezogen wird.

2. Presse nach Anspruch 1, dadurch gekennzeichnet, dass die Nuten (11) und die Zahnkanten (10) verschieden ausgestaltete, jeweils ineinander passende Querschnitte besitzen.

3. Presse nach Anspruch 1, dadurch gekennzeichnet, dass die Randnuten (13) der aussenliegenden Bänder (2c) und (17a) der Bandpakete (2) und (17) verschiedenartig ausgestaltete, zueinander passende Querschnitte, beispielsweise Segmente (Kreisabschnitte), Prismen, Trapeze oder dergleichen, aufweisen.

4. Presse nach Anspruch 1 bis 3, dadurch gekennzeichnet, dass zwischen dem Pressgut (14) und dem Draht (12), sowie den Aussenbändern (2c) und (17a) ein Hohlraum (16) zur Aufnahme von überschüssigem Harz gebildet ist.

**Claims**

1. Continuously operating press with an upper and a lower multilayer band packet (2, 17), each of which is guided over a respective pair of deflecting rollers and consists of press bands (2a, 2b, 2c) or (17a, 17b, 17c), which are intercalated, secured by shape-locking means against wandering laterally and which in respect of their length and thickness are adapted to the purpose of use and between the mutually facing runs (3) of which a material web, for example laminate, chip-board, fibre-board, ply-wood, electro-laminate or the like, can be compacted through influence of pressure, characterised thereby, that these means for securing against a lateral wandering of the press bands (2a, 2b, 2c or 17a, 17b, 17c) one relative to the other consist of continuous grooves (11), which extend in and over the entire running direction at the inward, mutually contacting surfaces of the press bands (2a, 2b, 2c) and (17a, 17b, 17c) of the multi-layer packets (2) and (17), with tooth edges (10) engaging into these grooves (11) and the outward bands (2c) and (17a) of the multi-layer packets (2) and (17) are equipped with edge portion grooves (13), which lie one opposite the other at the edge portions of the packets and into which a wire (12) is laid, the diameter of which is approximately as great as the sum of twice the depth of the edge portion groove (13) and the spacing of both the press bands (2) and (17) each from the other and the wire (12) is drawn through the press at the same speed of advance as the goods (14) to be pressed.

2. Press according to claim 1, characterised thereby, that the grooves (11) and the tooth edges (10) possess differently structured cross-sections respectively each fitting into the other.

3. Press according to claim 1, characterised thereby, that the edge portion grooves (13) of the outward bands (2c) and (17a) of the band packets (2) and (17) display differently structured cross-sections which fit together, for example segments (circular segments), prisms, trapezia or the like.

4. Press according to claim 1 to 3, characterised thereby, that a hollow space (16) for the reception of excess resin is formed between the goods (14) to be pressed and the wire (12) as well as the outward bands (2c) and (17a).

**Revendications**

1. Presse en continu comportant une bande de pressage à couches multiples (2, 17) supérieure et inférieure passant respectivement sur une paire de cylindres de renvoi, bandes composées de plusieurs couches de pressage (2a, 2b, 2c et 17a, 17b, 17c) engagées les unes dans les autres en étant bloquées contre le décalage latéral par des moyens de liaison par la forme et dont la longueur et l'épaisseur sont choisies en fonction de l'utilisation, et permettant de compacter par effet de pression une nappe de matière par exemple des produits lamifiés des plaques de copeaux, des plaques de fibres, du contreplaqué, des produits électrolamifiés ou analogues, entre les deux brins (3) tournés l'un vers l'autre, caractérisée en ce que les moyens pour le blocage évitant le décalage latéral des couches de pressage (2a, 2b, 2c et 17a, 17b, 17c) se composent de rainures (11) s'étendant en continu dans la direction de défilement de la bande sur les surfaces intérieures en contact des couches de pressage (2a, 2b, 2c et 17a, 17b, 17c) des bandes de pressage à couches multiples (2 et 17) ainsi que des arêtes dentées (10) et les couches (2c et 17a) situées à l'extérieur des bandes de pressage à couches multiples (2 et 17) sont munies à leur bord de rainures latérales (13), en regard, recevant un câble (12) dont le diamètre correspond sensiblement à la somme du double de la profondeur des rainures latérales (13) et de l'écartement des deux bandes de pressage (2 et 17) et en ce que le fil (12) est tiré à travers la presse à la même vitesse linéaire que le produit de pressage (14).

2. Presse selon la revendication 1, caractérisée en ce que les rainures (11) et les arêtes dentées (10) ont des sections différentes mais qui s'adaptent l'une dans l'autre.

3. Presse selon la revendication 1, caractérisée en ce que les rainures latérales (13) des couches extérieures (2c et 17a) des bandes à couches multiples (2 et 17) ont des sections de formes différentes mais adaptées l'une à l'autre par exemple des segments (arcs de cercle) des prismes, des trapèzes ou analogues.

4. Presse selon l'une quelconque des revendications 1 à 3, caractérisée par une cavité (16) subsistant entre le produit pressé (14) et le câble (12) ainsi qu'entre les couches extérieures (2c et 17a) pour recevoir la résine en excédent.

# Fig.1

Fig. 2

Fig. 3